# EUROPEAN PATENT APPLICATION

(11) **EP 3 659 677 A1**
(43) Date of publication of application: **03.06.2020**
(21) Application number: 19210783.7
(22) Date of filing: 21.11.2019
(51) Int. Cl.: A62C 13/64, F16K 39/02, F17C 13/04, A62C 13/00

(54) **SHUT-OFF VALVE FOR WHEELED EXTINGUISHERS**

(30) Priority: 28.11.2018 IT 201800010657
(71) Applicant: Bridgeport S.R.L., 24060 Bolgare (BG) (IT)
(72) Inventor: LEO, Leonardo Claudio, 25065 Lumezzane (Brescia) (IT)
(74) Representative: Petruzziello, Aldo

(57) **Abstract**

Shut-off valve for wheeled extinguishers comprising a valve-body (2) fixed to the upper mouth of a tank of extinguishing agent in powder, chemical water or various extinguishing mixtures, said valve-body (2) being internally hollow and having a lower opening (7) for the entry of the extinguishing agent, a side opening (9) for the exit of the extinguishing agent and an upper opening (8) for the insertion of a valve-assembly in said hollow valve-body, said valve-assembly comprising a bush (20) that can be attached to the valve-body (2) and housing an actuator cylinder (40) of a shutter (50) that can be engaged with a valve seat (54) provided internally to said hollow body (2), wherein between said bush (20) and said actuator (40) a cam system (30, 42) is provided, such that a rotation of said lever (44) causes a rotation and simultaneous linear translation of said actuator (40) and of said shutter (50) for the opening/closing of the valve.

## Description

The subject of the present invention is a shut-off valve for wheeled fire extinguishers.

As is known, a wheeled extinguisher has a weight greater than 20 kg, and is therefore transported on wheels. It consists of a steel sheet tank or casing, pressurised with inert gas or with dehumidified air at about 15 bar and contains as an extinguishing agent chemical powder consisting of saline compounds such as potassium bicarbonate, ammonium sulphates, etc., chemical water or other various mixtures.

These extinguishers are provided with a shut-off valve, mounted at the top of the tank, which must ensure a perfect seal in closing condition and allow a rapid opening for the delivery of the extinguishing substance.

The valves currently on the market have a screw shutter mechanism, i.e. provided with a thread that engages with a corresponding thread formed in the valve-body. An actuation lever is provided that allows the opening and the closing of the valve with at least three complete turns.

These screw valves guarantee a perfect seal if fully closed yet, on the other hand, they do not allow a rapid opening, since the screw has to be turned several times with the actuation lever, so that, most of the time, the operator, in the rush to dispense the extinguishing agent, does not open the valve completely, with a consequent reduction in the outgoing flow.

Another disadvantage of these valves is that the insertion of the safety pin is not immediate, as the holes provided in the valve-body and in the shutter have to be aligned.

Other shut-off valves that can be used for these fire extinguishers are the classic ball valves, which, however, are not widely used as they are not known to guarantee a perfect seal, given the high pressure inside the container.

There are also lever valves that cause an axial displacement of a small piston for opening/closing. However, these valves allow a limited opening and therefore a limited flow of the jet, without the possibility of adjustment.

The object of the invention is to eliminate the disadvantages of the prior art described above.

More particularly, one object of the invention is to provide a shut-off valve for wheeled extinguishers that performs a perfect seal in closing condition and that allows a rapid and complete opening at maximum flow.

Another object of the invention is to allow an easy and precise insertion of the safety pin without affecting or constraining the sealing position of the shutter.

Yet another object of the invention is to provide such a valve that is simple and economical to manufacture.

These and other objects are achieved by the shut-off valve for wheeled extinguishers according to the invention that has the features of the appended independent claim 1.

Advantageous embodiments of the invention are disclosed by the dependent claims.

Substantially, the shut-off valve for wheeled extinguishers comprises a valve-body fixed to the upper mouth of a tank of extinguishing substance in powder, chemical water or various extinguishing mixtures, said valve-body being internally hollow and having a lower opening for the entry of the extinguishing substance, a lateral opening for the exit of the extinguishing agent and an upper opening for the insertion of a valve-assembly in said hollow valve-body, said valve-assembly comprising a bush that can be attached to the valve-body and housing an actuator cylinder of a shutter engageable with a valve seat provided internally to said hollow body, wherein between said bush and said actuator a cam system is provided, such that a rotation of said lever causes a rotation and simultaneous linear translation of said actuator and of said shutter for the opening/closing of the valve.

Said cam system comprises two opposing cams with which a pin engages, said cams having a lower end section substantially flat or ending slightly inclined upwards, a rising ramp and an upper end section ending slightly inclined downwards.

Said cams are formed on the shell of said bush and said pin is inserted in a hole of said cylindrical actuator or, alternatively, said cams are formed in said cylindrical actuator and said pin is fixed to said bush or to said valve-body.

Said rising ramp of the cams has a continuous profile, curved, or with straight sections with different inclinations.

Advantageously, said actuator and said shutter are separated one from the other and between them are interposed elastic means to compensate plays and tolerances and to ensure the correct closure of the shutter, a spring likewise being housed in the valve-body to exert a thrust upwards on the shutter.

Further features of the invention will be made clearer by the following detailed description, referred to one of its embodiments purely by way of a non-limiting example, illustrated in the accompanying drawings, in which:

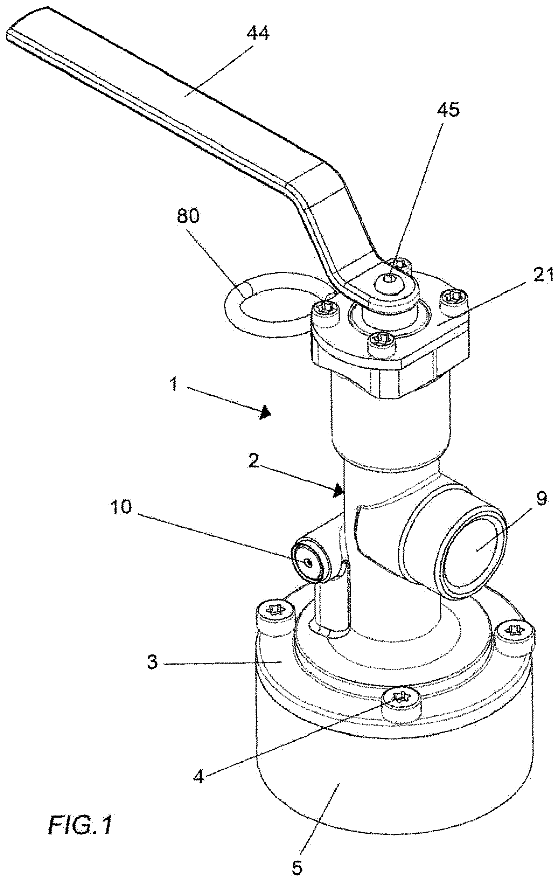

Figure 1 is an axonometric view from above of a valve according to the invention;

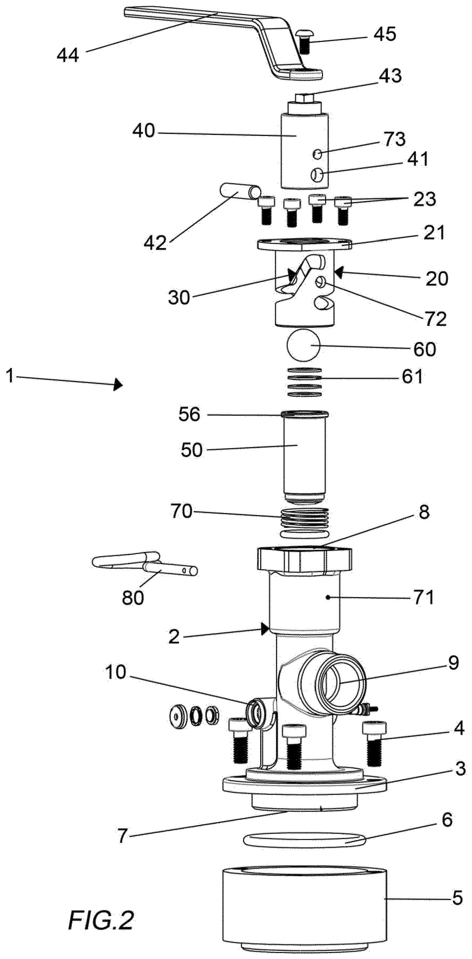

Figure 2 is a blown-up view of the valve of Figure 1;
Figure 3a is an axonometric view from above of a component of the valve of Figure 2, provided with actuation cams;
Figures 3b and 3c are side elevation views of the component of Figure 3a taken at 90° one in relation to the other;
Figures 4a, 4b, 4c are middle sections of the valve of Figure 1 in closed condition, in an intermediate condition and in open condition, respectively.

Referring to the accompanying drawings, the valve for wheeled fire extinguishers according to the invention is denoted as a whole by reference numeral 1, and comprises a valve-body 2 provided with a base flange 3 for fixing by means of screws 4 to a ring nut 5 which is usually welded to the upper mouth of the tank containing the extinguishing substance which, as said, can be powder, chemical water or various extinguishing mixtures pressurised with gas. A sealing gasket 6 is placed between flange 3 and ring nut 5.

This system of fixing of the valve-body 2 to the extinguishing agent container, with respect to known systems that provide for a female or male thread on the ring nut 5 and the corresponding male thread or an external turn lock on the valve-body 2, offers undoubted advantages, both from the financial point of view due to the absence of threading processes, and, above all, due to the absence of contact of the means of fixing with the extinguishing substance, above all in the case wherein this is a corrosive liquid.

The valve-body 2 is internally hollow, with a lower opening 7 for entry of the extinguishing fluid, an upper opening 8 for the mounting of the valve-assembly, a side opening 9 for the exit of the extinguishing agent and a second side opening 10, of smaller size, for the housing of a safety valve or of a pressure gauge.

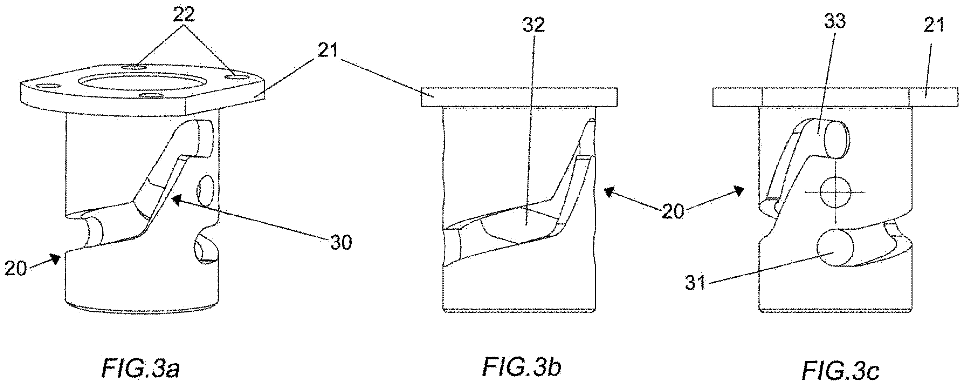

In the valve-body 2 is inserted a bush 20, which can be seen more clearly in Figures 3a-c, having an upper peripheral flange 21 with holes 22 for fixing to the upper mouth of the valve-body 2 by means of screws 23.

On the cylindrical shell of the bush 20 two opposing cam engraved profiles 30 are provided, perfectly specular or symmetrical, in the sense that each point of a cam 30 corresponds to a homologous point of the other cam 30, placed on the same horizontal plane at 180° with respect thereto.

Each cam 30, which forms a closed path, has a substantially flat lower end section 31 or ending slightly inclined upwards, a rising ramp 32 with a profile that is continuous, curved, or consisting of two straight sections of different inclination, joined one to the other, as shown in the drawings, and an upper end section 33, substantially flat or ending slightly inclined downwards, for the purposes to be described here below.

In the bush 20 a cylindrical body 40 is housed for the actuation of a shutter 50 of the valve, as will be described here below.

In a simplified embodiment of the valve-assembly, the cylindrical body 40 and the shutter 50 could be integral one with the other, i.e. made in a single piece.

The cylindrical body 40 has a through diametral hole 41 for the insertion of a pin 42, whose ends are arranged in the opposed cams 30 of the bush 20.

The cylindrical body 40 has above a threaded blind central hole 43 for the fixing of an actuation lever 44 by means of a screw 45.

The arrangement is such that a rotation of the lever 44 causes a rotary translation of the cylindrical body 40, thanks to the sliding of the pin 42 in the cam profiles 30 which are fixed and continuous, allowing a rapid passage of the pin from one end of the cams to the other for a rapid opening and closing of the valve.

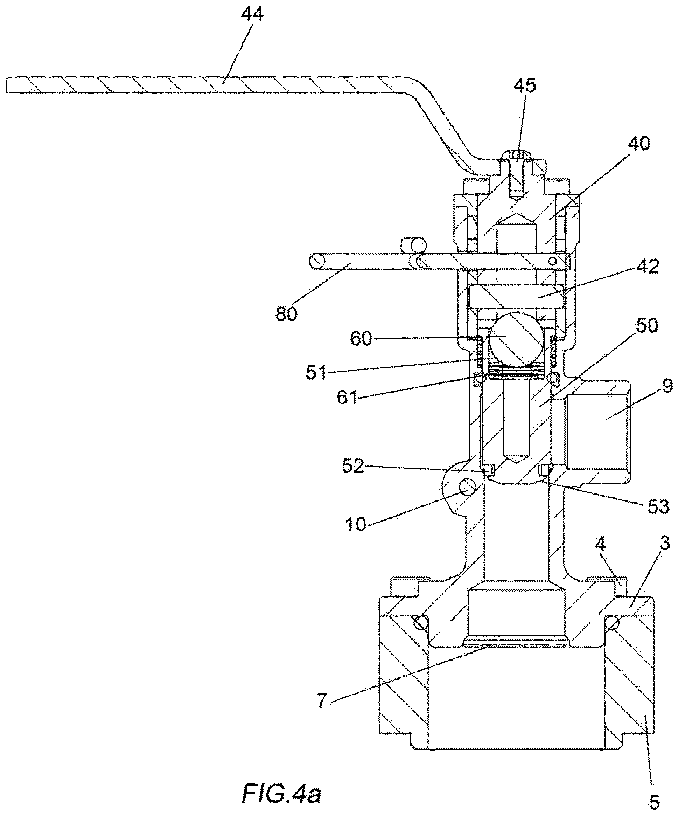

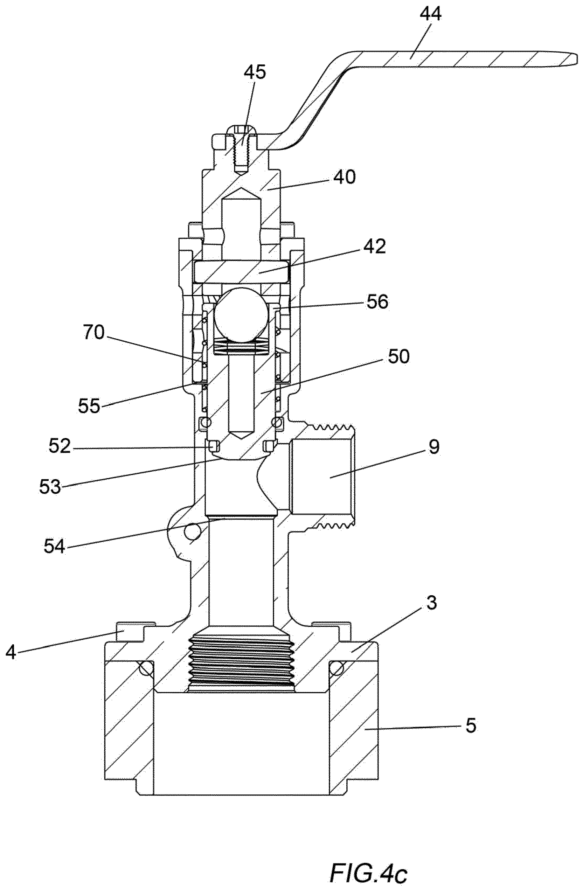

In particular, starting from the position of Figure 4a, which corresponds to the closing condition of the valve, as will be described more clearly here below, in which the pin 42 is housed in the lower end section 31 of the double cam 30, rotating the lever 44 in counter-clockwise direction through 180°, the pin 42 is placed in the upper end section 33 of the cam 30 (Figure 4c), corresponding to the condition of complete opening of the valve. In this condition the pin 42 is held in a slight depression determined by the upper end section 33 of the cam 30 with a slight downward inclination.

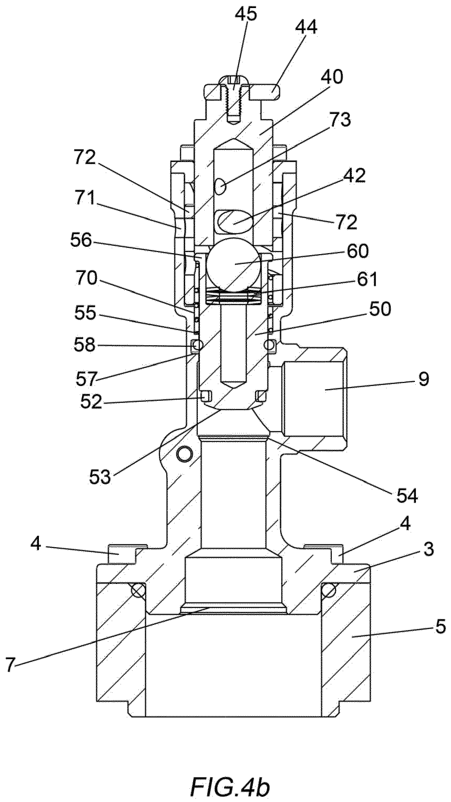

Figure 4b shows an intermediate opening phase of the valve, following a 90° rotation of the actuation lever 44.

In an alternative embodiment, the cam 30 could be formed passing through the cylindrical body 40 and the pin 42 fixed to the bush 20, that is, the valve-body 2.

The preferred embodiment of the valve-assembly is now described in greater detail, with the cylindrical element 40 separated from the shutter 50.

In particular, between the cylindrical element 40 and the shutter 50 a sphere 60 is interposed, resting on cup springs 61 housed in a cavity 51 of the shutter 50.

The fundamental function of the sphere 60, and in particular of the cup springs 61, is to compensate the various plays and tolerances of the entire valve-assembly, and to guarantee the correct compression of a sealing gasket 52 provided at a bevelled end 53 of the shutter 50, which goes to abut against a tapered seat 54 provided in the valve-body 2 immediately below the exit opening 9.

Since the shutter 50 is separated from the cylindrical actuator 40, to allow the rise thereof when the valve is opened, a spring 70 is provided, in this case a helical spring placed between an inner shoulder 55 of the valve-body 2 and an outer upper flange 56 of the shutter 50.

In the valve-body 2, at a higher level with respect to the exit opening 9 of the extinguishing agent, a seat 57 is formed for the housing of a gasket 58 that seals against the shutter 50, preventing upward leakage of fluid both during the delivery of the extinguishing agent and during the filling of the tank, which takes place through the same opening 9.

In the valve-body 2, in the bush 20 and in the cylindrical actuator element 40, respective through holes 71, 72, 73 are provided for the insertion of a safety pin 80, to be removed when using the extinguisher. The insertion of the safety pin 80 takes place in an easy and precise manner thanks to the presence of the cup springs 61, without affecting or constraining the sealing position of the shutter 50.

The advantages of the shut-off valve for wheeled extinguishers according to the invention are clear from the above, which, with a 180° rotation of the lever 44, by means of a cam system between the cylindrical actuator 40 and the bush 30, allows an easy and rapid actuation of the shutter 50 between the closing and opening position, with compensation of any plays and tolerances and a guarantee of the correct compression of the sealing gasket of the shutter, thanks to the presence of the cup springs 61 between actuator 40 and shutter 50.

The fixing of the valve-body 2 by means of the base flange 3 and the screws 4 allows the univocal positioning of the ring nut 5 during the phase of welding to the tank, and in particular the possibility of automating and simplifying the mounting of the valve on the tank.

Naturally the invention is not limited to the particular embodiment previously described and illustrated in the accompanying drawings, but numerous detailed changes may be made thereto within the reach of the person skilled in the art, without thereby departing from the scope of the invention itself as defined in the appended claims.

## Claims

1. On/off shut-off valve for wheeled extinguishers comprising a valve-body (2) fixed to the upper mouth of a tank containing an extinguishing agent in powder, chemical water or various extinguishing mixtures, said valve-body (2) being internally hollow and having a lower opening (7) for the entry of the extinguishing agent, a side opening (9) for the exit of the extinguishing agent and an upper opening (8) for the insertion of a valve-assembly in said hollow valve-body, said valve-assembly comprising a bush (20) that can be attached to the valve-body (2) and housing a cylindrical actuator (40) of a shutter (50) engageable with a valve seat (54) provided inside said valve-body (2), **characterised in that** between said bush (20) and said actuator (40) a cam system (30, 42) is provided, such that a rotation of said lever (44) causes a rotation and simultaneous linear translation of said actuator (40) and of said shutter (50) for the opening/closing of the valve,
wherein said cam system comprises two opposing cams (30) with which a pin (42) engages, said cams having a lower end section (31) substantially flat or ending slightly inclined upwards, a rising ramp (32) and an upper end section (33) ending slightly inclined downwards.

2. Valve according to claim 1, wherein said cams (30) are formed on the shell of said bush (20) and said pin (42) is inserted in a hole (41) of said cylindrical actuator (40).

3. Valve according to claim 1, wherein said cams (30) are formed in said cylindrical actuator (40) and said pin (42) is fixed to said bush (20) or to said valve-body (2).

4. Valve according to any one of the preceding claims, wherein said rising ramp (32) has a continuous, curved profile or with rectilinear sections with different inclination.

5. Valve according to any one of the preceding claims, **characterised in that** said actuator (40) and said shutter (50) are separated one from the other and elastic means (61) are interposed between them to compensate plays and tolerances and to ensure correct closure of the shutter (50), in the valve-body (2) a spring (70) is also housed for exerting an upward thrust on the shutter (50).

6. Valve according to claim 5, wherein said elastic means (70) are cup springs housed in the shutter (50), on which a sphere (60) rests.

7. Valve according to any one of the preceding claims, wherein said shutter (50) carries a sealing gasket (52) at one of its bevelled lower ends (53) which can be engaged with a tapered seat (54) provided in the valve-body (2) at a height lower than said opening (9) of exit of the extinguishing agent.

8. Valve according to any one of the preceding claims, **characterised in that** inside said valve-body (2), at a height higher than said exit opening (9), a seat (57) is provided for a sealing gasket (58) against said shutter (50).

9. Valve according to any one of the preceding claims, wherein said bush (20) has an upper flange (21) with holes (22) for fixing to the upper mouth of the valve-body (2) by means of screws (23).

10. Valve according to any one of the preceding claims, wherein a safety pin (80) is provided, inserted in aligned holes (71), (72), (73), provided respectively in the valve-body (2), in the bush (20) and in the cylindrical actuator (40).

11. Valve according to any one of the preceding claims, **characterised in that** said valve-body (2) has a base flange (3) for fixing by means of screws (4) to a ring nut (5) that can be welded to the tank containing the extinguishing agent.

12. Valve according to any one of claims 1 to 4, **characterised in that** said cylindrical actuator (40) and said shutter (50) are integral one with the other.
